# EUROPEAN PATENT SPECIFICATION

(11) **EP 2 964 137 B1**
(45) Date of publication and mention of the grant of the patent: **08.05.2019**
(21) Application number: 14760266.8
(22) Date of filing: 07.03.2014
(51) Int. Cl.: A61C 9/00, A61C 19/04, A61C 19/10

(54) **DEVICE AND SYSTEM FOR DENTAL APPLICATIONS AND METHOD RELATING THERETO**
VORRICHTUNG UND SYSTEM FÜR DENTALANWENDUNGEN SOWIE VERFAHREN HIERZU
DISPOSITIF ET SYSTÈME POUR APPLICATIONS DANS LE DOMAINE DENTAIRE ET PROCÉDÉ ASSOCIÉ

(30) Priority: 07.03.2013 US 201313788723
(43) Date of publication of application: 13.01.2016
(73) Proprietor: Dental Lab Aesthetics, LLC, Port Washington, DC 11050 (US)
(72) Inventor: KIM, Jason, J., Manhasset, NY 11030 (US)
(74) Representative: Trinks, Ole
(86) International application number: PCT/US2014/021605
(87) International publication number: WO 2014/138541

(56) References cited:
- WO-A1-97/46171
- WO-A2-2008/042936
- DE-A1- 19 942 917
- FR-A- 432 533
- JP-A- 2002 172 122
- JP-A- 2003 260 073
- JP-A- 2003 260 073
- US-A1- 2008 308 450
- US-A1- 2009 215 003
- US-A1- 2010 304 323
- US-A1- 2011 171 593
- US-A1- 2012 064 477
- US-A1- 2013 052 613

## Description

### FIELD OF THE INVENTION

The present invention relates to devices and systems for dental applications and methods relating thereto.

### BACKGROUND OF THE INVENTION

Various devices useful in the dental field have been developed in the past. For instance, U.S. Patent Nos. 305,900, 880,328, 1,464,987, 1,486,039, 1,493,417, 1,608,632, 1,634,717, 2,549,184, 4,227,877, 4,375,965, 4,484,890, 4,530,662, 4,689,010, 4,907,966, 5,336,086, 5,772,432, 6,079,977, 6,213,768 6,302,690, 6,428,315, 6,457,973, 6,629,841, 6,749,428, 7,125,251 and 7,273,371 and U.S. Patent Publication No. 2008/0311536 each disclose a device for taking an impression of a patient's teeth. In one aspect, the present invention relates to a dental tray useful in taking an accurate dental impression.

Various devices have also been developed for determining the shade of a person's teeth (see, e.g., U.S. Patent Nos. 4,207,678, 4,810,193, 4,919,617, 4,978,296, 5,261,815, 5,588,834, 5,685,712, 5,692,900, 5,725,372, 6,354,835 and 6,755,646). The present invention contemplates various additional features and aspects, which are discussed below.

The document FR 432 533 A relates to a dental tray for use in taking an impression of a person's teeth. The conventional dental tray comprises a first section having a longitudinal axis, and a second section sized and shaped so as to be mounted at least partially within said first section. The first and second sections are sized and shaped so as to define a trough therebetween for receiving an impression-taking material. The second section is movable relative to the first section in a first direction which is substantially parallel to the longitudinal axis of the first section.

The document JP 2003 260073 A relates to a device for use in determining the shade of a person's tooth, which has a front surface. The device comprises a substrate, and a plurality of discrete stickers, each of which is removably placed on the substrate. Each of the plurality of stickers has a single predetermined shade, which is different from the shade of each other one of the plurality of stickers.

### Summary of the Invention

In accordance with an embodiment of the present invention, a dental tray according to claim 1 has been provided.

In accordance with yet another embodiment of the present invention, a method for taking an impression of a person's teeth according to claim 10 has been provided.

### Brief Description of the Drawings

For a more complete understanding of the present invention, reference is made to the following detailed description of exemplary embodiments considered in conjunction with the accompanying drawings, in which:
FIG. 1 is a top perspective view of a dental tray constructed in accordance with an embodiment of the present invention;
FIG. 2 is an exploded, upper perspective view of the dental tray shown in FIG. 1;
FIG. 3 is a bottom perspective view of the dental tray shown in FIG. 1;
FIG. 4 is a bottom perspective view of an inner member of the dental tray shown in FIG. 1;
FIGS. 5 and 6 are perspective, partially broken away views of the dental tray shown in FIG. 1, illustrating its operation;
FIG. 7 is a top plan view of a shade chart;
FIG. 8 is a side view of the shade chart shown in FIG. 7;
FIG. 9 is a side view of one of a plurality of shade stickers provided on the shade chart of FIG. 7;
FIG. 10 is a view of a reverse side of the shade chart of FIG. 7;
FIG. 11 is a schematic view of a person's teeth and one of the shade stickers shown in FIGS. 1-9; and
FIG. 12 is a view of a kit constructed in accordance with an embodiment of the present invention;
FIG. 13 is a view of another kit;
FIG. 14 is a schematic view of a system for determining the shade of a person's teeth;
FIG. 15 is a view of a modified version of the shade chart shown in FIG. 7; and
FIG. 16 is a schematic view of a person's teeth and one of a plurality of shade stickers of the shade chart shown in FIG. 15.

### Detailed Description of the Invention

In accordance with embodiments of the present invention, various devices, systems, kits and/or methods are provided for use in dental applications. These devices, systems, kits and methods are discussed below.

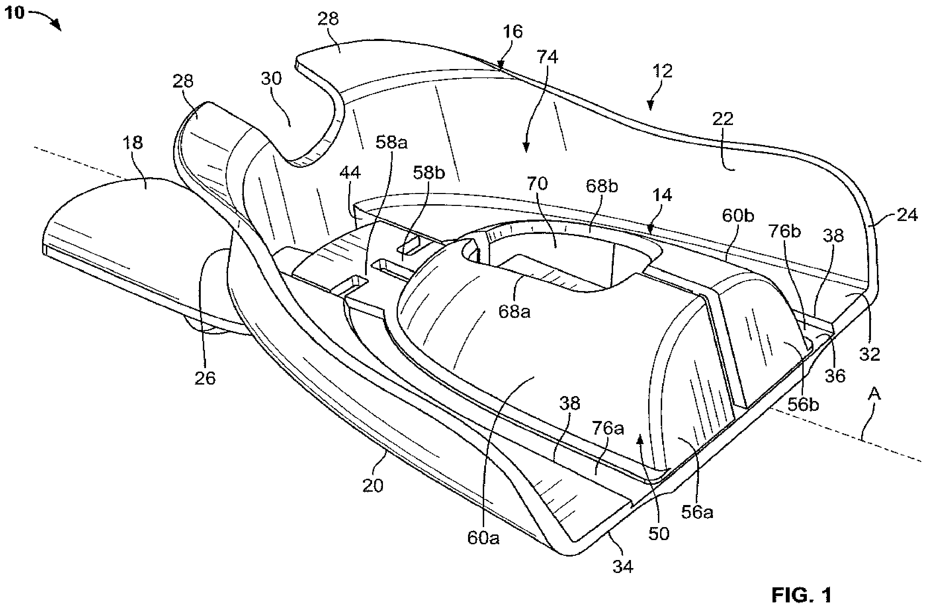

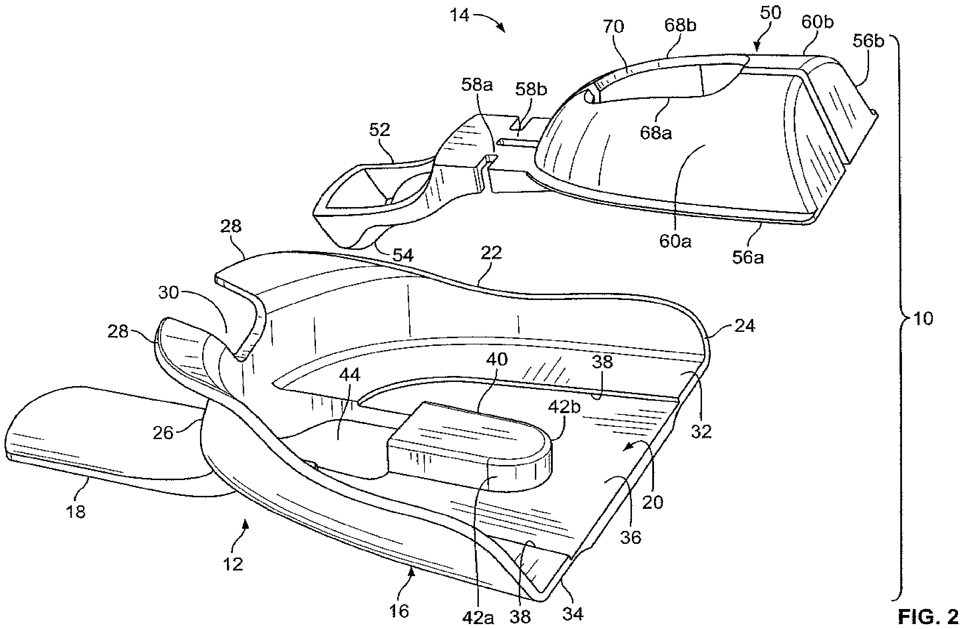

With reference to FIGS. 1 and 2, there is shown a dental tray assembly 10 constructed in accordance with an embodiment of the present invention. More particularly, the dental tray assembly 10, which is adapted for use in taking an impression of upper teeth of a person or a patient, has a longitudinal axis A and includes an outer tray member (i.e., section) 12. and an inner tray member (i.e., section) 14 movably mounted on the outer member 12. The construction of the inner and outer members 12, 14 will be discussed in greater detail below.

Still referring to FIGS. 1 and 2, the outer member 12 includes a tray 16 and a handle 18 extending from the tray 16. More particularly, the tray 16 is provided with a base plate 20, which extends generally in a horizontal manner, and a generally U-shaped outer wall 22, which projects generally vertically from the base plate 20. The tray 16 has an open rear end 24 and a front end 26, which is enclosed by the outer wall 22. Lip support members 28 extend from the outer wall 22 at the front end 26 of the tray 16 for supporting a patient's upper lip when the tray assembly 10 is inserted into the patient's mouth. A notch 30 is provided between the lip support members 28 and extends partially into the outer wall 22 at the front end 26.

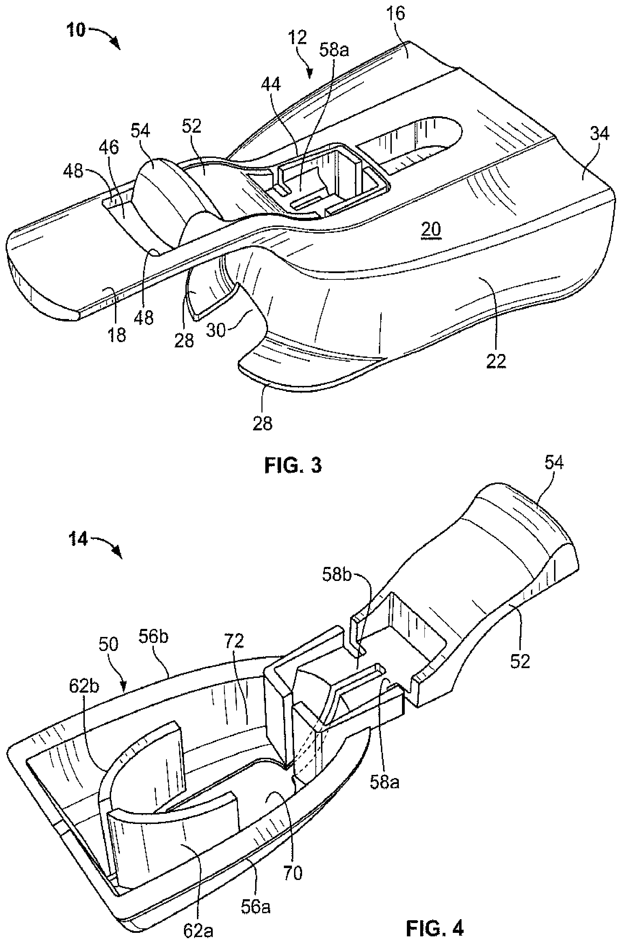

Now referring to FIGS. 1, 2 and 3, the base plate 20 of the tray 16 includes an upper side 32 and a lower side 34. A recessed area 36 is provided generally centrally in the base plate 20. The recessed area 36 has a slightly lower elevation compared to the rest of the upper side 32 of the base plate 20 such that an edge 38 is formed on the upper side 32 defining the recessed area 36. A ramp 40 projects upwardly from the base plate 20 and has a pair of generally curved guide wall portions 42a, 42b on opposite sides thereof. An opening 44 is formed in the base plate 20 adjacent the front end 26 of the tray 16 for purposes to be discussed below. A track 46 is provided in the handle 18 and is defined by a pair of axially extending support walls 48 (see FIG. 3).

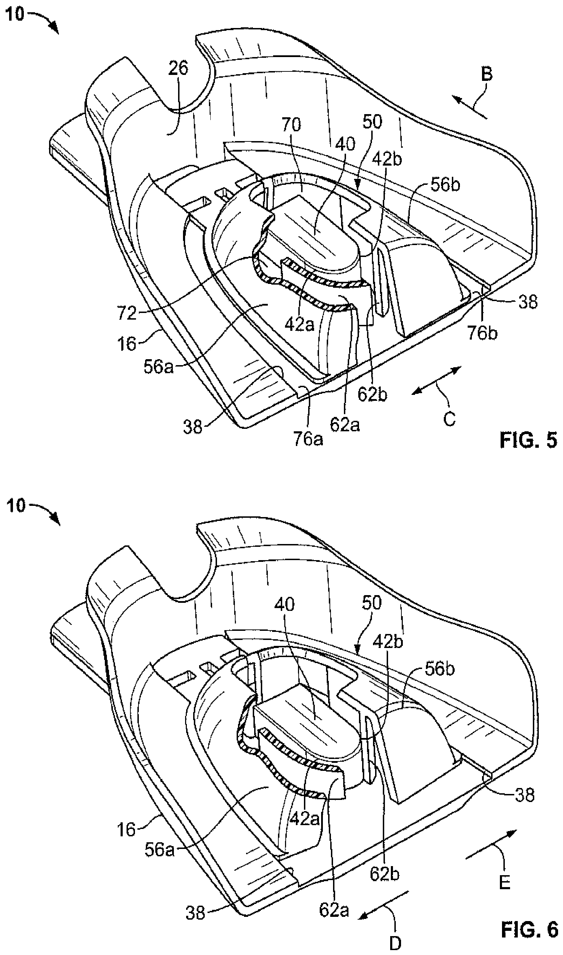

With reference to FIGS. 1, 2 and 4, the inner member 14 includes a compression section 50 and a handle 52 extending from the compression section 50 and having a tab 54 at an end thereof. More particularly, the compression section 50 is generally dome-shaped and includes a plurality of compression members 56a, 56b connected to the handle 52 via hinges 58a, 58b (e.g., living hinges), respectively, such that they are laterally pivotable toward or away from each other. More particularly, the compression member 56a is an element that is separate and independent from the compression member 56b. The compression members 56a, 56b have curved, half-dome-shaped walls 60a, 60b, respectively, and curved guides 62a, 62b, respectively. The guides 62a, 62b depend from the walls 60a, 60b, respectively, and are sized and shaped so as to engage the curved wall portions 42a, 42b, respectively, of the outer member 12 (see FIG. 6) for purposes to be discussed hereinbelow.

Notches 68a, 68b (see FIGS. 1 and 2) are formed in inner sides of the compression members 56a, 56b, respectively, cooperating to define an opening 70 in the compression section 50. The opening 70 communicates with a cavity 72 (see FIGS. 4 and 5) formed within the compression section 50 for purposes to be discussed hereinbelow.

Now referring to FIGS. 1 and 3, the inner member 14 is assembled with the outer member 12 by inserting the handle 52 of the inner member 14 through the opening 44 in the outer member 12. More particularly, the handle 52 of the inner member 14 is placed in the track 46 formed in the handle 18 of the outer member 12, while the compression section 50 of the inner member 14 is positioned on the recessed area 36 of the outer section 12 such that it covers the ramp 40. In this manner, a generally U-shaped trough 74 is formed between the outer wall 22 of the outer member 12 and the compression section 50 of the inner member 14 for receiving a conventional impression taking material.

When the compression section 50 is properly assembly with the tray 16 (see FIG. 1), the compression section 50 is movable relative to the tray 16 in an axial direction generally parallel to the longitudinal axis A (as indicated by arrow B in FIG. 5) between its rest position (see FIG. 5) and its retracted position (see FIG. 6). More particularly, in the rest position of the compression section 50, the compression members 56a, 56b are in their respective retracted positions such that they are placed in an abutting fashion with respect to one another (see FIG. 5). In the retracted position of the compression section 50, the compression members 56a, 56b move to their respective expanded positions, in which they are positioned away from each other in a lateral direction (as indicated by arrow C in FIG. 5). When the compression section 50 is in its rest position, spaces 76a, 76b (see FIGS. 1 and 5) are formed between the compression member 56a and the edge 38 and between the compression member 56b and the edge 38, respectively, so as to allow the compression members 56a, 56b to move from their respective retracted positions to their respective expanded positions.

In use, an impression material (not shown) is placed in the U-shaped trough 74 formed between the tray 16 and compression section 50. The compression material can be any conventional compression material. With the handle 18 gripped by a user (e.g., a dentist), the tray 16 and the compression section 50, as assembled, are inserted into the patient's mouth. Thereafter, the tray 16 is moved upwardly toward the pallet of the patient, causing the teeth of the patient to be pressed into the impression material in the trough 74. As the teeth are pressed into the impression material, an excess amount of the impression material flow out of the trough 74. The cavity 72 is adapted to receive an overflow of the impression material through the opening 70 of the compression section 50.

Once the tray assembly 10 is properly positioned in relation to the teeth, the tab 54 of the handle 58 of the inner member 14 is pulled forward in the axial direction (as indicated by arrow B in FIG. 5) such that the compression section 50 moves axially toward the front end 26 of the tray 16 (i.e., to its retracted position). As the compression section 50 moves in the forward axial direction, the guides 62a, 62b of the compression section 50 engage the curved wall portions 42a, 42b, respectively, of the ramp 40, causing the compression members 56a, 56b to move in the lateral direction away from each other (i.e., to their respective expanded positions), as indicated by arrows D and E, respectively, in FIG. 6. As the compression members 56a, 56b expand laterally, they press against the impression material so as to ensure that the impression material is properly applied against the teeth of the patient. In this regard, the edge 38 of the tray 16 is adapted to engage the compression members 56a, 56b so as to inhibit or prevent them from expanding beyond a predetermined extent (see FIG. 6). With the compression members 56a, 56b positioned in their expanded positions, the dental tray assembly 10 is held in place until the impression material cures. Thereafter, the tray assembly 10 is removed from the patient's mouth, and the impression material is removed from the tray assembly 10.

It should be appreciated that the tray assembly 10 of the present invention provides a number of advantages over the prior art discussed above. For instance, the compression members 56a, 56b are adapted to apply additional pressure against an impression material such that the impression material is properly pressed against teeth. As a result, an accurate impression of the teeth can be taken with the use of the tray assembly 10. Moreover, because the handle 52 of the inner tray member 14 is provided in the track 46 of the outer tray member 12, the axial movement of the compression section 50 can be effected with the use of one hand (e.g., with the handle 18 gripped by a person's hand, the tab 54 can be pulled with the index finger of that hand).

It should also be noted that the tray assembly 10 of the present invention can have numerous modifications and variations. For instance, while the tray assembly 10 is adapted for use in taking an impression of upper teeth, it can be modified for use in conjunction with lower teeth. Moreover, the compression section 50 can be modified to have a different shape.

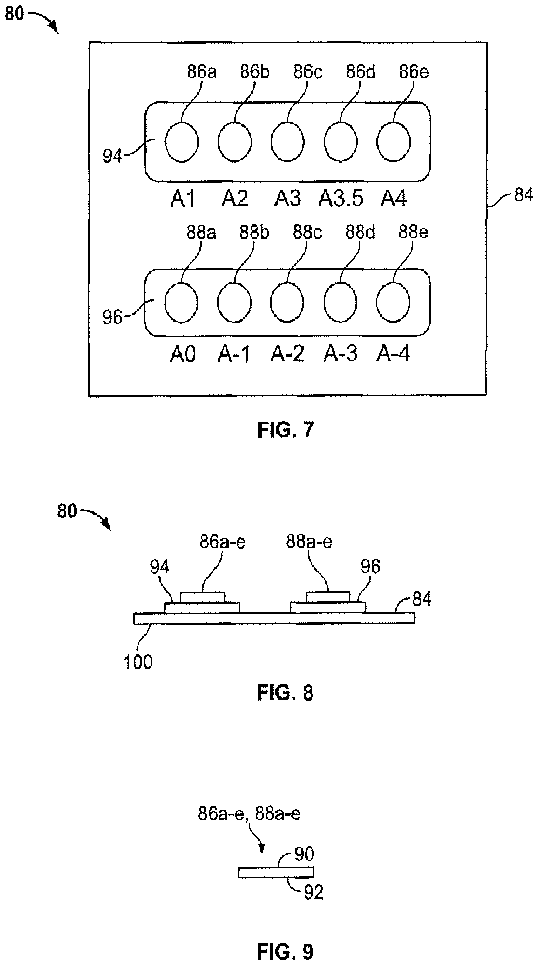

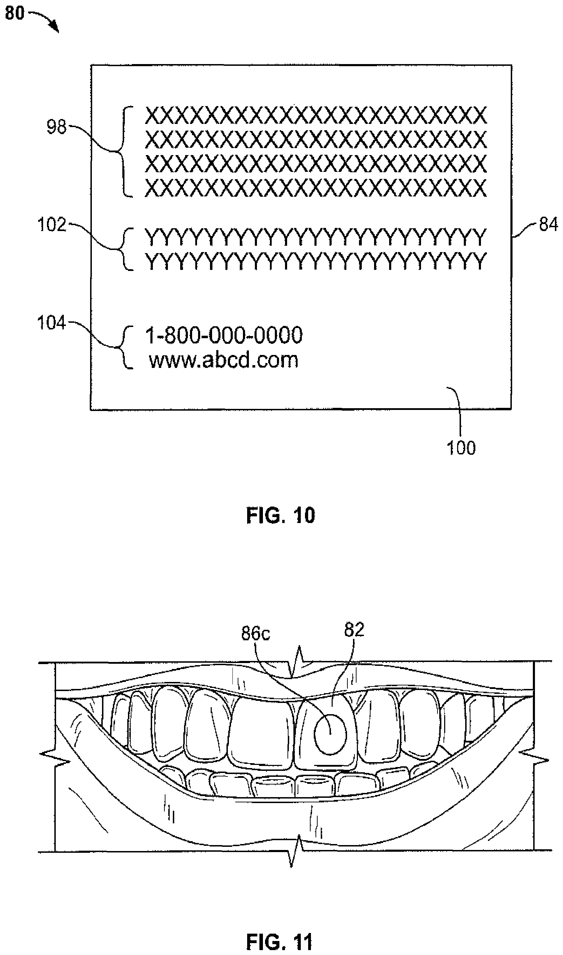

FIGS. 7-10 illustrate a teeth shade chart or guide 80. More particularly, the chart 80 is adapted for use in determining the shade and/or color (collectively, "shade") of a person's tooth or teeth 82 (see FIG. 11). The chart 80 includes a substrate or carrier 84, which is made from any suitable material, such as plastic, paper, metal, etc. The substrate 84 may be flexible or substantially rigid. In one embodiment, the substrate 84 is in the form of a sheet (see FIG. 8).

Peel-off shade stickers or chips 86a-86e are removably attached to the substrate 84 of the chart 80. In one embodiment, the stickers 86a-86e have tooth shades that are common in typical people, For instance, the stickers 86a-86e are provided with shades corresponding to shade codes A1, A2, A3, A3.5 and A4, respectively, of the shade guide sold under the trademark VITA. Shade codes corresponding to the shades of the stickers 86a-86e are indicated on the substrate 84 therebelow. The chart 80 can be provided with one or more peel-off stickers having additional shades that are common in people. In one embodiment, the stickers 86a-86e are arranged linearly in a horizontal row. The stickers 86a-86e are adapted for use by an individual for determining the existing shade of the individual's tooth or teeth, as will be discussed in greater detail hereinbelow.

Peel-off shade stickers or chips 88a-88e (see FIG. 7) are also removably attached to the substrate 82 of the chart 80. In one embodiment, the stickers 88a-88e have tooth shades that are brighter or whiter than those of the stickers 86a-86e (i.e., shades that are brighter or whiter than those that are common in people). For instance, the stickers 88a-88e can be provided with shades A0, A -1, A -2, A -3 and A -4, respectively, of the shade guide sold under the trademark VITA. The chart 80 can be provided with one or more peel-off stickers having additional brighter or whiter shades. Shade codes corresponding to the shades of the stickers 88a-88e are indicated on the substrate 84 therebelow. In one embodiment, the stickers 88a-88e are arranged linearly on the substrate in a horizontal row below the stickers 86a-86e. The stickers 88a-88e are adapted for use by an individual for selecting the tooth shade that he/she wishes to achieve by way of a tooth whitening tool or procedure and/or for determining whether he/she has achieved a selected tooth shade.

Referring to FIG. 9, each of the stickers 86a-86e, 88a-88e includes a front surface 90 and a rear surface 92. The front and rear surfaces 90, 92 of each of the stickers 86a-86e, 88a-88e are substantially smooth (i.e., planar). In one embodiment, the rear surface 92 of each of the stickers 86a-86e, 88a-88e is not applied with any adhesive material. In such circumstances, the substrate 84 is provided with a layer of adhesive material such that the stickers 86a-86e, 88a-88e can be removably attached thereto. In another embodiment, the rear surface 92 of each of the stickers 86a-86e, 88a-88e includes a layer of adhesive material for removably attaching the stickers 86a-86e, 88a-88e on the substrate 84. Laminates or films 94, 96 (see FIGS. 7 and 8) can be optionally provided on the substrate 84 so that the stickers 86a-86e, 88a-88e, respectively, can be removably attached thereto so as to facilitate their removal from the substrate 84.

Referring to FIG. 9, each of the stickers 86a-86e, 88a-88e is provided with a substantially planar or sheet-like construction. In one embodiment, each of the stickers 86a-86e, 88a-88e is provided with a thickness in the range of from about 0.005 mm to about 0.5 mm. In another embodiment, the thickness of each of the stickers 86a-86e, 88a-88e ranges from about 0.1 mm to about 0.3 mm.

In one embodiment, each of the stickers 86a-86e, 88a-88e is provided with a translucency that is similar to the translucency of the enamel layer of a typical person's tooth. For instance, the translucency of each of the stickers 86a-86e, 88a-88e may be within the range of from about 50% to about 95%. Alternatively, the translucency of each of the stickers 86a-86e, 88a-88e may range from about 65% to about 85%.

With reference to FIG. 10, instructions 98 for using the chart 80 are provided on a reverse side 100 of the chart 80 opposite the side to which the stickers 86a-86e, 88a-88e are attached. Additional instructions 102 and information 104 are provided on the side 100 of the chart 80 for purposes to be discussed below.

In use, one of the stickers 86a-86e is selectively removed from the substrate 84 by a user. The removed sticker (e.g., the sticker 86c) is then applied directly to a selected one of the user's teeth 82 (e.g., one of the two maxillary central incisors) such that the sticker 86c temporally sticks and lays flat against the surface of the selected tooth 82 (see FIG. 11). As discussed above, the rear surface 92 of the sticker 86c may be provided with an adhesive material so as to facilitate the adhesion of the sticker 86c to the tooth 82. Alternatively, the rear surface 92 of the removed sticker 86c and/or the surface of the selected tooth 82 may be applied with the user's saliva or other liquid substances (e.g., the user licks the rear surface 92 of the removed sticker 86c and/or the surface of the selected tooth 82 with his or her tongue) such that the sticker 86c can be removably and temporarily attached to the selected tooth 84 by the adhesive property of the saliva.

As illustrated in FIG. 11, the sticker 86c is applied to the tooth 82 such that the sticker 86c is positioned substantially at the center of the tooth 82. That is, the sticker 86c is superimposed directly on the tooth 82 such that all sides of the sticker 86a are surrounded by the surface of the tooth 82. As a result, the shade of the tooth 82 can be compared easily to the shade of the sticker 86c. Moreover, the adhesive material on the sticker 86c and/or the saliva applied thereto create a continuous connection or contact substantially throughout the interface between the tooth 82 and the sticker 86c. This connection or contact functions to blend the translucency of the sticker 86c with the translucency of the enamel layer of the tooth 82. The blended translucency of the sticker 86c and the tooth 82 mimics the translucency of an actual tooth enamel layer so as to allow a realistic and accurate shade matching between the sticker 86c and the tooth 82.

If the shade of the sticker 86c does not match with the shade of the tooth 82, the sticker 86c is removed and placed on a suitable place (e.g., back on the substrate 84). Another sticker (i.e., one of the stickers 86a, 86b, 86d and 86e remaining on the substrate 84) is removed from the substrate 84 and applied to the tooth 82 in the manner discussed above. For instance, if the shade of the initially selected sticker 86c is lighter than the shade of the tooth 82, then a darker-shaded sticker (e.g., one of the stickers 86d, 86e) is selected and applied to the tooth 82. This process is repeated until the user locates a matching one of the stickers 86a-86e, thereby allowing the user to determine the shade of his/her teeth.

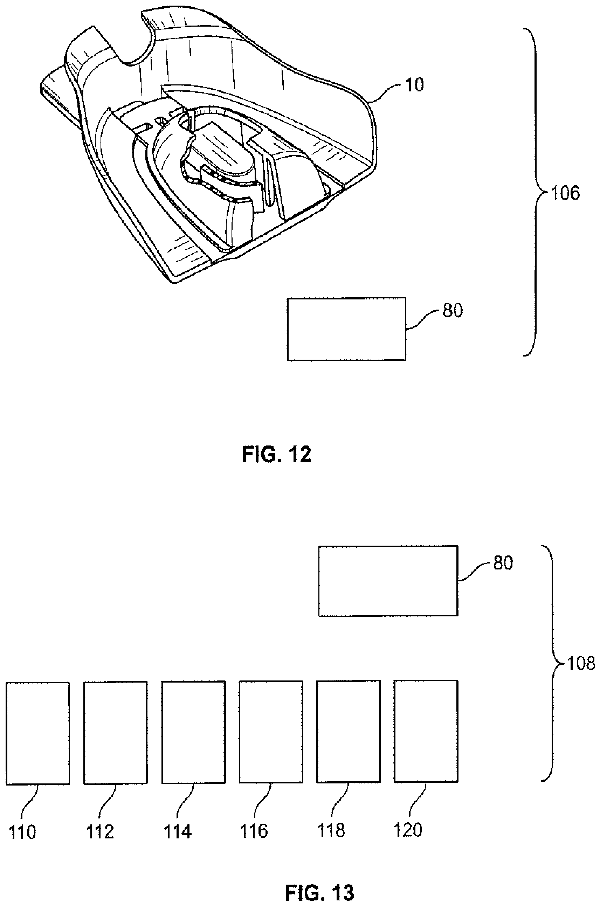

With reference to FIG. 12, a kit 106 is provided. More particularly, the kit 106 includes the chart 80 and the dental tray assembly 10 of the embodiment shown in FIGS. 1-6. The kit 106 can be provided directly to an end user, rather than a dental professional (e.g., a dentist), such that it can be used by the user in ordering one or more custom-made dental products directly from a dental laboratory without visiting or otherwise involving any dentist. The dental products include, without limitation, flippers (e.g., custom tooth inserts), sports mouthguards, dental night guards, custom whitening trays, novelty costume teeth (e.g., "Dracula" teeth, etc.), custom trays for providing a temporary preview of a person's teeth as disclosed in U.S. Patent Application No. 13/285,315 filed October 31, 2011 (published as U.S. Patent Publication No. 2013/0108989 A1), orthodontic trays (e.g., those sold under the trademark INVISALIGN), orthodontic retainers, etc. The dental tray assembly 10 may be replaced with any conventional dental tray for taking an impression of the user's teeth.

In use, once the user determines the shade of his/her teeth using the chart 80 as discussed above, the dental tray assembly 10 is used by the user to take a dental impression of his/her teeth in the manner described above in conjunction with the embodiment of FIGS. 1-6. After the dental impression has been taken, it is sent to a dental laboratory via mail or another delivery method (e.g., via messenger) together with the shade information or code of the matching sticker (i.e., one of the stickers 86a-86e) and the identification of the dental product or products that he/she wishes to order. Using the dental impression and the shade code provided by the user, the ordered dental products are custom-made by the dental laboratory for the user. Once the dental products are completed, they are sent to the user via mail or another delivery method.

FIG. 13 involves providing a dental whitening kit 108 including the chart 80. The kit 108, which may be provided directly to an end user, includes one or more conventional whitening kit components, such as a whitening strips 110, whitening gel 112, a mouth tray 114 for receiving the whitening gel therein for application to a person's teeth, an applicator 116 for applying the whitening gel (optionally preloaded with the whitening gel 112), an after-whitening remineralization gel 118 to reduce tooth sensitivity, and/or an applicator 120 for applying the remineralization gel, etc., all of which are illustrated schematically in FIG. 13.

The whitening components of the kit 108 are used in a conventional manner to whitening a user's teeth. Prior to the initiation of a whitening process, the user determines the original shade of his/her teeth (hereinafter "original tooth shade") by matching same with one of the stickers 86a-86e. In this regard, the chart 80 may be provided with a space on which the user can record the code corresponding to the original tooth shade. After the completion of the whitening process, the user determines which of the stickers 86a-86e matches with the shade of his/her whitened teeth (referred to hereinafter as "the whitened shade"). If the user's teeth have been whitened beyond the shades of the stickers 86a-86e, the user may use the stickers 88a-88e, which have lighter or whiter shades than those of the stickers 86a-86e. The stickers 88a-88e are used in a method identical to the method discussed above in conjunction with the stickers 86a-86e. By comparing the sticker 86a-86e, 88a-88e matching with the whitened shade to the sticker corresponding to the original tooth shade, the user can determine the effectiveness of the whitening process (e.g., the degree by which his/her teeth have been whitened).

The kit 108 may also include the dental tray assembly 10 of the embodiment illustrated in FIGS. 1-6. By including the dental tray assembly 10 in the kit 108, the user may take an impression of his or her dental tray prior to the initiation of the whitening process and send the dental impression to a dental laboratory such that a custom-fit mouth tray may be made for him/her for the application of the whitening gel to his/her teeth, In such circumstances, the mouth tray 114 illustrated in FIG. 13 may be omitted from the kit 108.

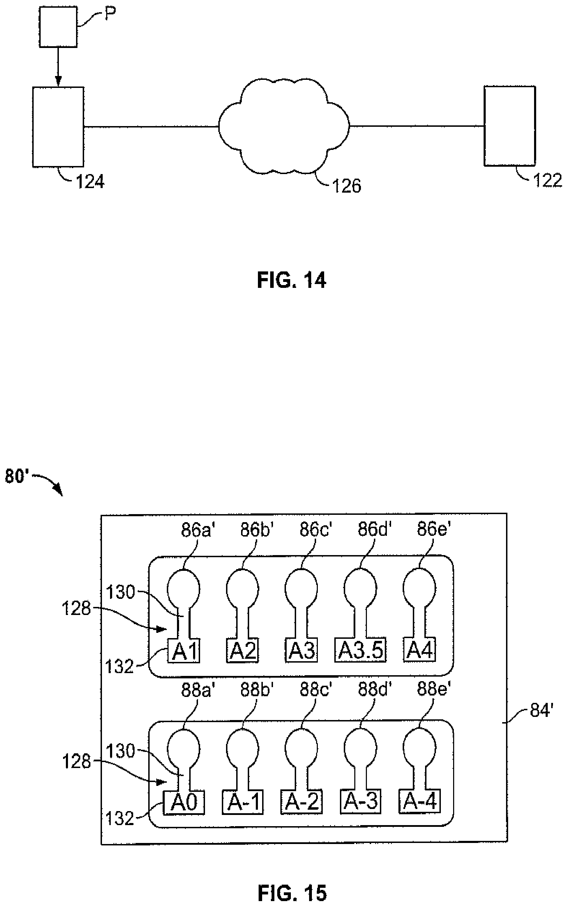

Another method is provided for determining the shade of a person's teeth. One of the stickers 86a-86e (e.g., the sticker 86b) is removed from the chart 80 and is applied to one of the person's teeth, as described above. An analog or digital photograph P (see FIG. 14) of the person's teeth and the sticker 86b attached thereto is taken with a camera. The photograph P is then used for determining the shade of the teeth by using the shade of the sticker 86b as a reference shade. In one embodiment, the photograph P is transmitted to a computerized processor 122 (e.g., a remotely located central server equipped with a microprocessor) together with the shade code of the selected sticker 86b. The photograph P and the shade code can be sent to the processor 122 in any conventional manner, such as via data uploading website, email, text message, etc. For instance, when the photograph P is taken with the use of a digital camera included in a portable communication device 124 (see FIG. 14), such as a smart phone, the photograph P and the shade code of the sticker 86b can be sent directly from the portable communication device to the processor 122 via a conventional network 126 (e.g., the Internet or a mobile communication network). Alternatively, the communication device 124 can be a separate component from the digital camera, being adapted to receive the photograph P for transmission to the processor 122. The instructions 102 and information 104 are included on the side 100 of the chart 80 for providing instructions and information for the transmission of the photograph P and the shade code (e.g., a website address for directly uploading materials to the processor 122, an email addresses for sending materials to the processor 122, etc.).

Once the processor 122 receives the photograph P and the shade code of the sticker 86b, it uses the shade of the sticker 86b as a reference shade to determine the shade of the teeth. More particularly, the processor 122 compares the shade of the teeth in the photograph P to the shade of the sticker 86b. Since the processor 122 is provided with the shade code of the sticker 86b (i.e., shade code A2), it is able to determine the shade code corresponding to the teeth. The shade code of the teeth as determined by the processor 122 is then transmitted to the user (e.g., to the communication device 124) in a conventional manner.

As discussed above, the processor 122 is adapted to determine the shade of the teeth by comparing the shade of the teeth in the photograph P to the shade of the sticker 86b, the shade code of which is provided to the processor 122. In such circumstances, the chart 80 may contain a single shade sticker for use in conjunction with this process.

A computer application or program for determining the shade of the teeth from the photograph P can be stored locally on the communication device. In this manner, the photograph P and the shade code of the sticker 86b need not be transmitted to the processor 122.

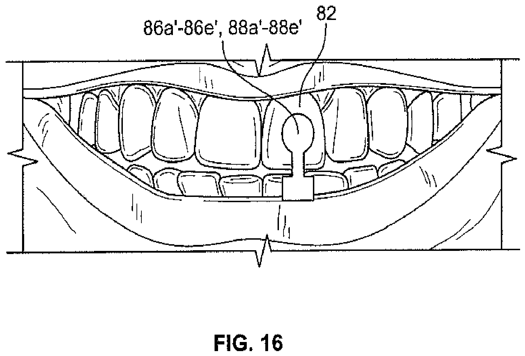

FIG. 15 illustrates a shade chart 80', which is a modified version of the shade chart 80 illustrated in FIG. 7. The shade chart 80' of FIG. 15 is constructed, assembled and used in the same basic manner as the shade chart 80 of FIG. 7, except as discussed below. The shade chart 80' includes a plurality of shade stickers 86a'-86e' and a plurality of shade stickers 88a'-88e'. Each of the stickers 86a'-86e', 88a'-88e' includes a handle 128 so as to facilitate the handling of a corresponding one of the stickers 86a'-86e', 88a'-88e' by a user. The handle 128 of each sticker 86a'-86e', 88a'-88e' includes a stem 130 connected (integrally or otherwise) to a corresponding one of the stickers 86a'-86e', 88a'-88e' and a base 132 connected thereto. The base of each sticker 86a'-86e', 88a'-88e' has a sufficient size such that it can be gripped by a user for handling purposes and/or such that a corresponding shade code can be indicated thereon. The handles 128 can be attached to a substrate 84' of the chart 80' in the same manner as the stickers 86a-86e and the stickers 88a-88e of the chart 80 shown in FIG. 7. Alternatively, the handles 128 may be loose from (i.e., not attached to) the substrate 84' so as to facilitate the removal of their corresponding stickers 86a'-86e' and the stickers 88a'-88e' from the substrate 84'. FIG. 16 illustrates one of the stickers 86a'-86e', 88a'-88e' removably applied to one of a person's teeth 82.

## Claims

1. A dental tray (10) for use in taking an impression of a person's teeth, comprising an outer tray member (12) having a longitudinal axis (A) and an inner tray member (14) sized and shaped so as to be mounted at least partially within said outer tray member (12) and including a compression section (50) which includes first and second compression members (56a, 56b), said outer tray member (12) and inner tray member (14) being sized and shaped so as to define a trough (74) between an outer wall (22) of the outer tray member (12) and the compression section (50) for receiving an impression-taking material, said inner tray member (14) being movable relative to said outer tray member (12) in an axial direction which is substantially parallel to said longitudinal axis (A) of said outer tray member (12), said first and second compression members (56a, 56b) being movably attached to said inner tray member (14), each of said first and second compression members (56a, 56b) being movable in a lateral direction substantially perpendicular to said longitudinal axis (A) thereby moving in the lateral direction away from each other in response to the movement of said inner tray member (14) in said axial direction.

2. The dental tray (10) of claim 1,
wherein said outer tray member (12) has a first lateral side and a second lateral side opposite said first lateral side; and said first and second compression members (56a, 56b) are located at least partially in said outer tray member (12), said first and second compression members (56a, 56b) being movable in said lateral direction toward said first and second lateral sides, respectively, of said outer tray member (12) in response to the movement of said inner tray member (14) in said axial direction.

3. The dental tray (10) of claim 2,
wherein said outer tray member (12) includes a ramp (40); and wherein said first and second compression members (56a, 56b) of said inner tray member (14) are sized and shaped so as to engage said ramp (40) in response to the movement of said inner tray member (14) in said axial direction so as to cause said first and second compression members (56a, 56b) to move in said lateral direction toward said first and second lateral sides, respectively, of said outer tray member (12).

4. The dental tray (10) of claim 3,
wherein said ramp (40) includes a first wall portion, which is located adjacent said first lateral side of said outer tray member (12), and a second wall portion, which is located adjacent said second lateral side of said outer tray member (12); and wherein said first and second compression members (56a, 56b) have first and second guides, respectively, depending therefrom, said first and second guides being configured to engage said first and second wall portions, respectively, in response to the movement of said inner tray member (14) in said axial direction so as to cause said first and second compression members (56a, 56b) to move in said lateral direction toward said first and second lateral sides, respectively, of said outer tray member (12).

5. The dental tray (10) of claim 3 or 4,
wherein said first and second compression members (56a, 56b) are positioned adjacent to each other such that they cooperate to define a dome having a substantially hollow space therein, said ramp (40) being positioned in said space; wherein each of said first and second compression members (56a, 56b) preferably has a cutout adjacent a top portion thereof such that an overflow of the impression material can be received in said space from said trough (74) through said cutouts.

6. The dental tray (10) of claim 4,
wherein said outer tray member (12) has a first handle portion; and said inner tray member (14) has a second handle portion for moving said inner tray member (14) in said first direction, said first handle portion being substantially aligned with said second handle portion; wherein said inner tray member (14) preferably has first and second hinges (58a, 58b) connecting said first and second compression members (56a, 56b), respectively, to said handle portion of said inner tray member (14).

7. The dental tray (10) of any one of claims 2 to 6,
wherein said outer wall (22) includes a generally U-shaped wall, said U-shaped wall and said first and second compression members (56a, 56b) form said trough (74) therebetween, wherein said U-shaped wall preferably has at least one lip support (28) projecting outwardly therefrom, and wherein said at least one lip support (28) preferably includes a pair of lip supports (28) projecting outwardly from a front end of the U-shaped wall.

8. The dental tray (10) of any one of claims 1 to 7,
wherein said tray is provided in combination with a device for use in determining the shade of a person's tooth, which has a front surface, said device comprising at least one shade sticker having a predetermined shade, said at least one sticker having a size smaller than the tooth and configured so as to be removably attached to the front surface of the tooth such that said at least one sticker can be superimposed directly on the front surface of the tooth.

9. The dental tray (10) of claim 8,
further comprising a substrate having a substantially planar construction, said at least one sticker being removably attached to said substrate such that said at least one sticker can be peeled off said substrate;
wherein said at least one sticker preferably has a translucency that is comparable to the translucency of an enamel layer of a conventional tooth, wherein said translucency is within the rage of from about 50% to about 95%;
wherein said at least one sticker preferably includes a plurality of stickers, each of which is sized and shaped so as to be removably attached to the front surface of the tooth such that each of said plurality of stickers can be superimposed directly on the front surface of the tooth; and/or wherein each of said plurality of stickers includes a handle so as to facilitate the handling of each of said plurality of stickers.

10. A method for taking an impression of a person's teeth with the use of a dental tray (10) according to claim 1, said method comprising the steps of: placing an impression-taking material in the trough (74) of the tray; inserting the tray into a mouth of the person; moving the tray such that the teeth are inserted into the impression material placed in the trough (74); and moving the second section in the first direction so as to cause the first and second movable members to move in the second direction.

11. The method of claim 10,
wherein the first section of the tray has a first lateral side and a second lateral side opposite the first lateral side; and wherein the first and second movable members are located at least partially in the first section, the first and second movable members being movable in the second direction toward the first and second lateral sides, respectively, of the first section in response to the movement of the second section in the first direction.

12. The method of claim 11,
wherein the first section includes a ramp (40); and wherein the first and second movable members of the second section are sized and shaped so as to engage the ramp (40) in response to the movement of the second section in the first direction so as to cause the first and second movable members to move in the second direction toward the first and second lateral sides, respectively, of the first section;
wherein the ramp (40) includes a first wall portion, which is located adjacent the first lateral side of the first section, and a second wall portion, which is located adjacent the second lateral side of the first section; and wherein the first and second movable members have first and second guides, respectively, depending therefrom, the first and second guides being configured to engage the first and second wall portions, respectively, in response to the movement of the second section in the first direction so as to cause the first and second movable members to move in the second direction toward the first and second lateral sides, respectively, of the first section; and
wherein the first and second movable members are preferably positioned adjacent to each other such that they cooperate to define a dome having a substantially hollow space therein, the ramp (40) being positioned in the space.

13. The method of any one of claims 10 to 12,
further comprising the step of determining the shade of at least one of the teeth using a shade sticker having a size smaller than a size of the at least one of the teeth and having a predetermined shade and a surface, said determining step including the steps of removably attaching the sticker to a front surface of the at least one of the teeth such that the sticker is superimposed directly on the front surface of the at least one of the teeth; and comparing the shade of the at least one of the teeth to the shade of the sticker attached thereto so as to determine the shade of the at least one of the teeth.

## Patentansprüche

1. Zahn-Abdruckschale (10) zur Verwendung bei der Abdrucknahme der Zähne einer Person, die Folgendes aufweist: ein äußeres Schalenelement (12) mit einer Längsachse (A) und ein inneres Schalenelement (14), das derart bemessen und geformt ist, dass es zumindest teilweise innerhalb des äußeren Schalenelements (12) befestigt werden kann, und einen Druckbereich (50) aufweist, der erste und zweite Druckelement (56a, 56b) aufweist, wobei das äußere Schalenelement (12) und das innere Schalenelement (14) derart bemessen und geformt sind, dass sie eine Mulde (74) zum Aufnehmen eines Abdruckmaterials definieren, und zwar zwischen einer Außenwand (22) des äußeren Schalenelements (12) und dem Druckbereich (50), wobei das innere Schalenelement (14) relativ zu dem äußeren Schalenelement (12) in einer axialen Richtung beweglich ist, die im Wesentlichen parallel zu der Längsachse (A) des äußeren Schalenelements (12) verläuft, wobei das erste und zweite Druckelement (56a, 56b) beweglich an dem inneren Schalenelement (14) befestigt sind, wobei jedes von dem ersten und dem zweiten Druckelement (56a, 56b) in einer lateralen Richtung im Wesentlichen senkrecht zu der Längsachse (A) beweglich ist, so dass sie sich in der lateralen Richtung voneinander weg bewegen, und zwar als Reaktion auf die Bewegung des inneren Schalenelements (14) in der axialen Richtung.

2. Zahn-Abdruckschale (10) nach Anspruch 1,
wobei das äußere Schalenelement (12) eine erste laterale Seite und eine zweite laterale Seite gegenüber der ersten laterale Seite aufweist; und wobei das erste und zweite Druckelement (56a, 56b) zumindest bereichsweise in dem äußeren Schalenelement (12) angeordnet sind, wobei das erste und zweite Druckelement (56a, 56b) beweglich sind, und zwar in lateraler Richtung zu der ersten bzw. zweiten lateralen Seite des äußeren Schalenelements (12) hin und als Reaktion auf die Bewegung des inneren Schalenelements (14) in der axialen Richtung.

3. Zahn-Abdruckschale (10) nach Anspruch 2,
wobei das äußere Schalenelement (12) einen Anstiegsbereich (40) aufweist; und wobei das erste und zweite Druckelement (56a, 56b) des inneren Schalenelements (14) derart bemessen und geformt sind, dass sie mit dem Anstiegsbereich (40) in Eingriff kommen, und zwar als Reaktion auf die Bewegung des inneren Schalenelements (14) in axialer Richtung, um zu bewirken, dass sich das erste und zweite Druckelement (56a, 56b) in lateraler Richtung zu der ersten bzw. zweiten lateralen Seite des äußeren Schalenelements (12) bewegen.

4. Zahn-Abdruckschale (10) nach Anspruch 3,
wobei der Anstiegsbereich (40) einen ersten Wandbereich, der angrenzend an die erste laterale Seite des äußeren Schalenelements (12) angeordnet ist, und einen zweiten Wandbereich aufweist, der angrenzend an die zweite laterale Seite des äußeren Schalenelements (12) angeordnet ist; und wobei das erste und zweite Druckelement (56a, 56b) erste bzw. zweite Führungen aufweisen, wobei abhängig hiervon die erste und zweite Führung derart ausgebildet ist, dass sie mit dem ersten bzw. zweiten Wandbereich in Eingriff kommen, und zwar als Reaktion auf die Bewegung des inneren Schalenelements (14) in axialer Richtung, um zu bewirken, dass sich das erste und zweite Druckelement (56a, 56b) in lateraler Richtung zu der ersten bzw. zweiten lateralen Seite des äußeren Schalenelements (12) bewegen.

5. Zahn-Abdruckschale (10) nach Anspruch 3 oder 4,
wobei das erste und zweite Druckelement (56a, 56b) derart angrenzend zueinander angeordnet sind, dass sie zusammenwirken, um eine Wölbung mit einem im Wesentlichen hohlen Raum darin zu definieren, wobei der Anstiegsbereich (40) in dem Raum angeordnet ist; wobei jedes von dem ersten und zweiten Druckelement (56a, 56b) vorzugsweise eine Aussparung angrenzend an einen oberen Bereich hiervon aufweist, und zwar derart, dass ein Überschuss des Abdruckmaterials in dem Raum von der Mulde (74) durch die Aussparungen aufgenommen werden kann.

6. Zahn-Abdruckschale (10) nach Anspruch 4,
wobei das äußere Schalenelement (12) einen ersten Griffbereich aufweist; und wobei das innere Schalenelement (14) einen zweiten Griffbereich zum Bewegen des inneren Schalenelements (14) in die erste Richtung aufweist, wobei der erste Griffbereich im Wesentlichen mit dem zweiten Griffbereich ausgerichtet ist; wobei das innere Schalenelement (14) vorzugsweise ein erstes und zweites Gelenk (58a, 58b) aufweist, das das erste bzw. zweite Druckelement (56a, 56b) mit dem Griffbereich des inneren Schalenelements (14) verbindet.

7. Zahn-Abdruckschale (10) nach einem der Ansprüche 2 bis 6,
wobei die Außenwand (22) eine im Wesentlichen U-förmige Wand aufweist, wobei die U-förmige Wand und das erste und zweite Druckelement (56a, 56b) die Mulde (74) hierzwischen ausbilden, wobei die U-förmige Wand vorzugsweise mindestens eine Lippenstütze (28) aufweist, die hiervon nach außen hin vorsteht, und wobei die mindestens eine Lippenstütze (28) vorzugsweise ein Paar von Lippenstützen (28) aufweist, die von einem Vorderende der U-förmigen Wand nach außen vorstehen.

8. Zahn-Abdruckschale (10) nach einem der Ansprüche 1 bis 7,
wobei die Schale in Kombination mit einer Vorrichtung zur Verwendung beim Bestimmen der Farbe des Zahnes einer Person angeordnet ist, der eine Vorderfläche aufweist, wobei die Vorrichtung mindestens einen Farbaufkleber mit einer vorbestimmten Farbe aufweist, wobei der mindestens eine Aufkleber eine Größe aufweist, die kleiner als der Zahn ist und derart ausgebildet ist, dass er lösbar an der Vorderfläche des Zahnes befestigt werden kann, so dass der mindestens eine Aufkleber direkt auf die Vorderfläche des Zahnes aufgesetzt werden kann.

9. Zahn-Abdruckschale (10) nach Anspruch 8,
die ferner ein Substrat mit einer im Wesentlichen planaren Konstruktion aufweist, wobei der mindestens eine Aufkleber derart lösbar an dem Substrat befestigt ist, dass der mindestens eine Aufkleber von dem Substrat abgezogen werden kann;
wobei der mindestens eine Aufkleber vorzugsweise eine Transluzenz aufweist, die mit der Transluzenz einer Schmelzschicht eines herkömmlichen Zahnes vergleichbar ist, wobei die Transluzenz innerhalb eines Bereichs von etwa 50% bis etwa 95% liegt;
wobei der mindestens eine Aufkleber vorzugsweise eine Vielzahl von Aufklebern aufweist, von denen jeder derart bemessen und geformt ist, dass er lösbar an der Vorderfläche des Zahnes derart befestigt ist, dass jeder der Vielzahl von Aufklebern direkt auf die Vorderfläche des Zahnes aufgesetzt werden kann; und/oder
wobei jeder der Vielzahl von Aufklebern einen Griff aufweist, um die Handhabung jedes der Vielzahl von Aufklebern zu erleichtern.

10. Verfahren zur Abdrucknahme der Zähne einer Person unter Verwendung einer Zahn-Abdruckschale (10) nach Anspruch 1,
wobei das Verfahren folgende Schritte aufweist:
Anordnen eines Abdruckmaterials in der Mulde (74) der Schale;
Einsetzen der Schale in den Mund der Person;
Bewegen der Schale derart, dass die Zähne in das in der Mulde (74) angeordnete Abdruckmaterials eingesetzt werden; und
Bewegen des zweiten Bereichs in die erste Richtung, und zwar derart, dass bewirkt wird, dass das erste und zweite bewegliche Element sich in die zweite Richtung bewegen.

11. Verfahren nach Anspruch 10,
wobei der erste Bereich der Schale eine erste laterale Seite und eine zweite laterale Seite gegenüber der ersten lateralen Seite aufweist; und wobei das erste und zweite beweglichen Element zumindest bereichsweise in dem ersten Bereich angeordnet sind, wobei das erste und zweite bewegliche Element in der zweiten Richtung zu der ersten bzw. zweiten lateralen Seite des ersten Bereichs hin beweglich sind, und zwar als Reaktion auf die Bewegung des zweiten Bereichs in die erste Richtung.

12. Verfahren nach Anspruch 11,
wobei der erste Bereich einen Anstiegsbereich (40) aufweist; und wobei das erste und zweite bewegliche Element des zweiten Bereichs derart bemessen und geformt sind, dass sie mit dem Anstiegsbereich (40) in Eingriff kommen, und zwar als Reaktion auf die Bewegung des zweiten Bereichs in die erste Richtung, um zu bewirken, dass sich das erste und zweite bewegliche Element in der zweiten Richtung zu der ersten bzw. zweiten lateralen Seite des ersten Bereichs hin bewegen;
wobei der Ansteigsbereich (40) einen ersten Wandbereich, der angrenzend an die erste laterale Seite des ersten Bereichs angeordnet ist, und einen zweiten Wandbereich aufweist, der angrenzend an die zweite Seitenseite des ersten Abschnitts angeordnet ist; und wobei das erste und zweite bewegliche Element erste bzw. zweite Führungen aufweist, wobei abhängig hiervon die erste und zweite Führung dazu ausgebildet ist, dass sie mit dem ersten bzw. zweiten Wandbereich in Eingriff kommt, und zwar als Reaktion auf die Bewegung des zweiten Bereichs in die erste Richtung, so dass bewirkt wird, dass sich das erste und zweite bewegliche Element in der zweiten Richtung zu den ersten und zweiten lateralen Seiten des ersten Bereichs hin bewegen; und
wobei das erste und zweite bewegliche Element vorzugsweise derart angrenzend zueinander angeordnet sind, dass sie so zusammenwirken, dass sie eine Wölbung mit einem im Wesentlichen hohlen Raum darin definieren, wobei der Anstiegsbereich (40) in dem Raum angeordnet ist.

13. Verfahren nach einem der Ansprüche 10 bis 12,
das ferner einen Schritt zum Bestimmen der Farbe mindestens eines der Zähne aufweist, und zwar unter Verwendung eines Farbaufklebers mit einer Größe, die kleiner als die Größe des mindestens einen der Zähne ist, und der eine vorbestimmte Farbe und eine Oberfläche aufweist, wobei der Bestimmungsschritt folgende Schritte aufweist: lösbares Befestigen des Aufklebers an einer Vorderfläche des mindestens einen der Zähne, so dass der Aufkleber direkt auf der Vorderfläche des mindestens einen der Zähne aufgesetzt ist; und Vergleichen der Farbe des mindestens einen der Zähne mit der Farbe des daran befestigten Aufklebers, um die Farbe des mindestens einen der Zähne zu bestimmen.

## Revendications

1. Porte empreinte dentaire (10) destiné à être utilisé pour prendre une impression des dents d'une personne, comprenant un élément en plateau extérieur (12) ayant un axe longitudinal (A) et un élément en plateau intérieur (14) d'une taille et d'une forme propres à être monté au moins partiellement à l'intérieur dudit élément en plateau extérieur (12) et incluant une section de compression (50) qui inclut un premier et un second élément de compression (56a, 56b), ledit élément en plateau extérieur (12) et ledit élément en plateau intérieur (14) étant d'une taille et d'une forme propres à définir une goulotte (74) entre une paroi extérieure (22) de l'élément en plateau extérieur (12) et la section de compression (50) pour recevoir un matériau de prise d'impression, ledit élément en plateau intérieur (14) étant déplaçable par rapport audit élément en plateau extérieur (12) dans une direction axiale qui est sensiblement parallèle audit axe longitudinal (A) dudit élément en plateau extérieur (12), ledit premier et ledit second élément de compression (56a, 56b) étant attachés de façon déplaçable sur ledit élément en plateau intérieur (14), chacun dudit premier et dudit second élément de compression (56a, 56b) étant déplaçable dans une direction latérale sensiblement perpendiculaire audit axe longitudinal (A) en se déplaçant ainsi dans la direction latérale en éloignement l'un de l'autre en réponse au mouvement dudit élément en plateau intérieur (14) dans ladite direction axiale.

2. Porte empreinte dentaire (10) selon la revendication 1,
dans lequel ledit élément en plateau extérieur (12) a un premier côté latéral et un second côté latéral opposé audit premier côté latéral ; et ledit premier et ledit second élément de compression (56a, 56b) sont situés au moins partiellement dans ledit élément en plateau extérieur (12), ledit premier et ledit second élément de compression (56a, 56b) étant déplaçables dans ladite direction latérale vers ledit premier et ledit second côté latéral, respectivement, dudit élément en plateau extérieur (12) en réponse au mouvement dudit élément en plateau intérieur (14) dans ladite direction axiale.

3. Porte empreinte dentaire (10) selon la revendication 2,
dans lequel ledit élément en plateau extérieur (12) inclut une rampe (40) ; et dans lequel ledit premier et ledit second élément de compression (56a, 56b) dudit élément en plateau intérieur (14) sont d'une taille et d'une forme propres à engager ladite rampe (40) en réponse au mouvement dudit élément en plateau intérieur (14) dans ladite direction axiale de manière à amener ledit premier et ledit second élément de compression (56a, 56b) à se déplacer dans ladite direction latérale vers ledit premier et ledit second côté latéral, respectivement, dudit élément en plateau extérieur (12).

4. Porte empreinte dentaire (10) selon la revendication 3,
dans lequel ladite rampe (40) inclut une première portion de paroi, qui est située adjacente audit premier côté latéral dudit élément en plateau extérieur (12), et une seconde portion de paroi, qui est située adjacente audit second côté latéral dudit élément en plateau extérieur (12) ; et dans lequel ledit premier et ledit second élément de compression (56a, 56b) possèdent un premier et un second guide, respectivement, qui dépendent d'eux-mêmes, ledit premier et ledit second guide étant configurés pour engager ladite première et ladite seconde portion de paroi, respectivement, en réponse au mouvement dudit élément en plateau intérieur (14) dans ladite direction axiale de manière à amener ledit premier et ledit second élément de compression (56a, 56b) à se déplacer dans ladite direction latérale vers ledit premier et ledit second côté latéral, respectivement, dudit élément en plateau extérieur (12).

5. Porte empreinte dentaire (10) selon la revendication 3 ou 4,
dans lequel ledit premier et ledit second élément de compression (56a, 56b) sont positionnés adjacents l'un à l'autre de telle façon qu'ils coopèrent pour définir une coupole ayant un espace sensiblement creux à l'intérieur, ladite rampe (40) étant positionné dans ledit espace ; dans lequel chacun dudit premier et dudit second élément de compression (56a, 56b) ayant de préférence une découpe adjacente à une portion supérieure de lui-même de telle façon qu'un déversement du matériau d'impression peut être reçu dans ledit espace depuis ladite goulotte (74) à travers lesdites découpes.

6. Porte empreinte dentaire (10) selon la revendication 4,
dans lequel ledit élément en plateau extérieur (12) a une première portion formant poignée ; et ledit élément en plateau intérieur (14) a une seconde portion formant poignée pour déplacer ledit élément en plateau intérieur (14) dans ladite première direction, ladite première portion formant poignée étant sensiblement alignée avec ladite seconde portion formant poignée ; dans lequel ledit élément en plateau intérieur (14) possède de préférence une première et une seconde charnière (58a, 58b) qui connectent ledit premier et ledit second élément de compression (56a, 56b), respectivement, à ladite portion formant poignée dudit élément en plateau intérieur (14).

7. Porte empreinte dentaire (10) selon l'une quelconque des revendications 2 à 6,
dans lequel ladite paroi extérieure (22) inclut une paroi généralement en forme de U, ladite paroi en forme de U et ledit premier et ledit second élément de compression (56a, 56b) forment ladite goulotte (74) entre eux, et ladite paroi en forme de U a de préférence au moins un support à lèvre (28) qui se projette vers l'extérieur depuis elle-même, et dans lequel ledit au moins un support à lèvre (28) inclut de préférence une paire de supports à lèvre (28) qui se projettent vers l'extérieur depuis une extrémité avant de la paroi en forme de U.

8. Porte empreinte dentaire (10) selon l'une quelconque des revendications 1 à 7,
dans lequel ledit porte empreinte est prévu en combinaison avec un dispositif destiné à être utilisé pour déterminer la teinte d'une dent d'une personne, qui présente une surface avant, ledit dispositif comprenant au moins une vignette ayant une teinte prédéterminée, ladite au moins une vignette ayant une taille plus petite que la dent et étant configurée pour être attachée de façon amovible sur la surface avant de la dent de telle façon que ladite au moins une vignette peut être superposée directement sur la surface avant de la dent.

9. Porte empreinte dentaire (10) selon la revendication 8,
comprenant en outre un substrat ayant une construction sensiblement plane, ladite au moins une vignette étant attachée de manière amovible audit substrat de telle façon que ladite au moins une vignette peut être enlevée dudit substrat par pelage ;
dans lequel ladite au moins une vignette présente de préférence un caractère translucide qui est comparable au caractère translucide d'une couche d'émail d'une dent traditionnelle, dans lequel ledit caractère translucide est dans la plage d'environ 50 % à environ 95 % ;
dans lequel ladite au moins une vignette inclut de préférence une pluralité de vignettes, dont chacune présente une taille et une forme propres à être attachée de façon amovible sur la surface avant de la dent de telle façon que chacune de ladite pluralité de vignettes peut être superposée directement sur la surface avant de la dent ; et/ou dans lequel chacune de ladite pluralité de vignettes inclut une poignée de manière à faciliter la manipulation de chacune de ladite pluralité de vignettes.

10. Procédé pour prendre une impression des dents d'une personne en utilisant un porte empreinte (10) selon la revendication 1,
comprenant les étapes consistant à :
placer un matériau de prise d'impression dans la goulotte (74) du porte empreinte ;
insérer le porte empreinte dans une bouche de la personne ;
déplacer le porte empreinte de telle façon que les dents sont introduites dans le matériau d'impression placé dans la goulotte (74) ; et
déplacer la seconde section dans la première direction de manière à amener le premier et le second élément déplaçable à se déplacer dans la seconde direction.

11. Procédé selon la revendication 10,
dans lequel la première section du porte empreinte a un premier côté latéral et un second côté latéral opposé au premier côté latéral ; et dans lequel le premier et le second élément déplaçable sont situés au moins partiellement dans la première section, le premier et le second élément déplaçable étant déplaçables dans la seconde direction vers le premier et le second côté latéral, respectivement, de la première section en réponse au mouvement de la seconde section dans la première direction.

12. Procédé selon la revendication 11,
dans lequel la première section inclut une rampe (40) ; et dans lequel le premier et le second élément déplaçable de la seconde section sont d'une forme et d'une taille propres à engager la rampe (40) en réponse au mouvement de la seconde section de la première direction de manière à amener le premier et le second élément déplaçable à se déplacer dans la seconde direction vers le premier et le second côté latéral, respectivement, de la première section ;
dans lequel la rampe (40) inclut une première portion de paroi, qui est située adjacente au premier côté latéral de la première section, et une seconde portion de paroi, qui est située adjacente au second côté latéral de la première section ; et dans lequel le premier et le second élément déplaçable ont un premier et un second guide, respectivement, qui dépendent d'eux-mêmes, le premier et le second guide étant configurés pour engager la première et la seconde portion de paroi, respectivement, en réponse au mouvement de la seconde section dans la première direction de manière à amener le premier et le second élément déplaçable à se déplacer dans la seconde direction vers le premier et le second côté latéral, respectivement, de la première section ; et
dans lequel le premier et le second élément déplaçable sont de préférence positionnés adjacents l'un à l'autre de telle manière qu'ils coopèrent pour définir une coupole ayant un espace sensiblement creux à l'intérieur, la rampe (40) étant positionnée dans l'espace.

13. Procédé selon l'une quelconque des revendications 10 à 12,
comprenant en outre l'étape consistant à déterminer la teinte de l'une au moins des dents en utilisant une vignette de teinte ayant une taille plus petite qu'une taille de ladite au moins une dent et ayant une teinte prédéterminée et une surface, ladite étape de détermination incluant les étapes consistant à attacher de manière amovible la vignette sur une surface avant de ladite au moins une dent, de telle façon que la vignette soit superposée directement sur la surface avant de ladite au moins une dent ; et comparer la teinte de ladite au moins une dent et la teinte de la vignette attachée sur celle-ci de manière à déterminer la teinte de ladite au moins une dent.
